# EUROPEAN PATENT SPECIFICATION

(11) **EP 4 507 140 B1**
(45) Date of publication and mention of the grant of the patent: **02.12.2026**
(21) Application number: 22936553.1
(22) Date of filing: 08.04.2022
(51) Int. Cl.: H01S 3/067, H01S 3/10, H01S 3/094

(54) **OPTICAL FIBER AMPLIFIER**
FASEROPTISCHER VERSTÄRKER
AMPLIFICATEUR À FIBRE OPTIQUE

(43) Date of publication of application: 12.02.2025
(73) Proprietor: NTT, Inc., Tokyo 100-8116 (JP)
(72) Inventor: SAKAMOTO, Taiji, Musashino-shi, Tokyo 180-8585 (JP); NAKAJIMA, Kazuhide, Musashino-shi, Tokyo 180-8585 (JP); IMADA, Ryota, Musashino-shi, Tokyo 180-8585 (JP)
(74) Representative: v. Bezold & Partner Patentanwälte - PartG mbB
(86) International application number: PCT/JP2022/017359
(87) International publication number: WO 2023/195155

(56) References cited:
- WO-A1-2010/057288
- WO-A1-2018/138982
- WO-A1-2020/209170
- JP-A- 2014 192 466
- JP-A- 2015 510 253
- JP-A- 2016 153 863
- US-A1- 2003 161 357
- US-A1- 2018 109 067
- TAKESHITA HITOSHI ET AL: "Configurations of Pump Injection and Reinjection for Improved Amplification Efficiency of Turbo Cladding Pumped MC-EDFA", JOURNAL OF LIGHTWAVE TECHNOLOGY, IEEE, USA, vol. 38, no. 11, 17 February 2020 (2020-02-17), pages 2922 - 2929, XP011790443, ISSN: 0733-8724, [retrieved on 20200527], DOI: 10.1109/JLT.2020.2974483
- SAKAMOTO TAIJI ET AL: "Characteristics of Randomly Coupled 12-core Erbium-Doped Fiber Amplifier", JOURNAL OF LIGHTWAVE TECHNOLOGY, IEEE, USA, vol. 39, no. 4, 28 December 2020 (2020-12-28), pages 1186 - 1193, XP011835656, ISSN: 0733-8724, [retrieved on 20210204], DOI: 10.1109/JLT.2020.3047614
- LEI CHENGMIN ET AL: "Taper-fused side pump combiner for all-fiber lasers and amplifiers: A review", OPTICS AND LASER TECHNOLOGY, ELSEVIER SCIENCE PUBLISHERS BV., AMSTERDAM, NL, vol. 130, 19 May 2020 (2020-05-19), XP086177299, ISSN: 0030-3992, [retrieved on 20200519], DOI: 10.1016/J.OPTLASTEC.2020.106353
- MAEDA KOICHI ET AL: "Multicore erbium doped fiber amplifiers", PROCEEDINGS OF SPIE; [PROCEEDINGS OF SPIE ISSN 0277-786X VOLUME 10524], SPIE, US, vol. 9773, 13 February 2016 (2016-02-13), pages 977302 - 977302, XP060069613, ISBN: 978-1-5106-1533-5, DOI: 10.1117/12.2208402
- UKAI KOSUKE ET AL: "Proposal of Center Core Pumped Multi-Core Erbium-Doped Fibers for SDM", 2016 ASIA COMMUNICATIONS AND PHOTONICS CONFERENCE (ACP), OSA, 2 November 2016 (2016-11-02), pages 1 - 3, XP033534048
- MATTE-BRETON CHARLES ET AL: "Novel Fuseless Optical Fiber Side-Coupler based on Half-Taper for Cladding Pumped EDFAs", 2020 OPTICAL FIBER COMMUNICATIONS CONFERENCE AND EXHIBITION (OFC), OSA, 8 March 2020 (2020-03-08), pages 1 - 3, XP033767572, DOI: 10.1364/OFC.2020.T3A.2
- SUPE ANDIS ET AL: "Recent Developments in Cladding-Pumped Doped Fiber Amplifiers for Telecommunications Systems", 2020 22ND INTERNATIONAL CONFERENCE ON TRANSPARENT OPTICAL NETWORKS (ICTON), IEEE, 19 July 2020 (2020-07-19), pages 1 - 6, XP033829122, DOI: 10.1109/ICTON51198.2020.9203436
- PETER M KRUMMRICH ET AL: "Evaluation of potential optical amplifier concepts for coherent mode multiplexing", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6 March 2011 (2011-03-06), pages 1 - 3, XP031946225, ISBN: 978-1-4577-0213-6

## Description

### Technical Field

The present disclosure relates to an optical fiber amplifier.

### Background Art

In an optical fiber communication system, a loss of light propagating through an optical fiber is amplified with an optical amplifier at every fixed distance and relayed to perform long-distance transmission. In the amplification in the optical amplifier, signal light and pumping light for exciting a rare earth element are injected into an amplification optical fiber in which a core region doped with the rare earth element (An erbium-doped optical fiber (EDF), using erbium, is mainly adopted.) (Light with 980 nm or 1480 nm is mainly adopted as the pumping light in a case of EDF), and the signal light is amplified without being converted into electricity.

In current communication using a single mode optical fiber (SMF), a core pumping type optical amplifier that amplifies signal light propagating through a core by similarly guiding pumping light to the core is used. On the other hand, in recent years, space division multiplexing (SDM) optical fibers using a multi-core fiber having a plurality of cores in a cross section of the optical fiber or a multimode fiber in which two or more modes propagate through the inside of a core, which have been studied in order to expand transmission capacity of optical fibers, have been studied, and optical fiber amplifiers in which a plurality of spatial modes propagates through one of these optical fibers have been studied (See, for example, Non Patent Literature 1.).

In rivalry with these SDM optical fibers, an SDM optical fiber amplifier for simultaneously amplifying a plurality of spatial modes has been studied, and a cladding-pumped optical fiber amplifier for guiding pumping light to a cladding region of an optical fiber and collectively amplifying a plurality of cores or a plurality of modes, which is different from a core pumping type, has been studied (See, for example, Non Patent Literature 2.). The cladding-pumped optical fiber amplifier can use a multimode light source, as the pumping light, having power efficiency superior to that of a single mode light source generally used in the core pumping type, and does not always require temperature control by a Peltier element necessary for the single mode light source, and is expected to show that the cladding-pumped optical fiber amplifier exhibits excellent amplification efficiency. As compared with the core pumping type, the cladding-pumped optical fiber amplifier has a problem of a low overlap between a region through which pumping light propagates and a core region doped with a rare earth element, and a problem of a small amount of pumping light absorbed in an amplification optical fiber; However, high amplification efficiency has been established by studies of increasing the amount of pumping light absorbed in the optical fiber by increasing a core cladding ratio Rcc, which is a ratio between a total area of cores in the optical fiber and a cladding area including the core region (See, for example, Non Patent Literature 3.).

### Citation List

### Non Patent Literature

Non Patent Literature 1: Y. Tsuchida et al., "Amplification characteristics of a multi-core erbium-doped fiber amplifier," in Proc. of OFC2012, paper OM3C.3 (2012)
Non Patent Literature 2: K. S. Abedin et al., "Cladding-pumped erbium-doped multicore fiber amplifier," Opt. Express, vol. 20, No. 18, pp. 20191-20200 (2012)
Non Patent Literature 3: T. Sakamoto et al., "Characteristics of Randomly Coupled 12-core Erbium-Doped Fiber Amplifier," J. of Lightw. Technol., vol. 39, no. 4, pp. 1186-1193 (2021)

### Summary of Invention

### Technical Problem

In order to increase Rcc, it is preferable that a cladding diameter is small. However, in a configuration of an optical fiber amplifier, an optical fiber connected to a pumping light source is typically a multimode fiber having a core diameter of 105 µm. When such a multimode fiber and a pumping optical fiber having a cladding diameter of 105 µm or less are used, a spot size of the multimode fiber and the cladding diameter of the amplification optical fiber differ in a pumping light combiner, and amplification efficiency decreases due to loss of pumping light.

For example, Non Patent Literature 3 discloses that an erbium-doped optical fiber having a cladding diameter of 90 µm is used as an amplification optical fiber, and loss results from difference of a cladding region at a connection point with an optical fiber output from a pumping light combiner.

That is, an SDM optical fiber amplifier has a problem of difference between a spot size of pumping light from a pumping light source and the cladding diameter of the amplification optical fiber in the pumping light combiner, which results in difficulty in increasing amplification efficiency due to loss of the pumping light.

Therefore, in order to solve the above problem, an object of the present invention is to provide an optical fiber amplifier in which loss of pumping light in a pumping light combiner is reduced to increase amplification efficiency.

### Solution to Problem

In order to achieve the above object, a core size conversion unit narrowing a core diameter of an optical fiber, through which pumping light from a pumping light source propagates, is arranged in front of a pumping light combiner, and a spot size of the pumping light and a cladding diameter of an amplification optical fiber are equivalent to each other in the pumping light combiner.

Specifically, an optical fiber amplifier according to the present invention includes:
an amplification optical fiber having a plurality of cores doped with a rare earth element in a cladding;
a pumping light source that outputs pumping light for pumping the rare earth element to a multimode optical fiber;
a core size conversion unit that reduces a diameter of a core of the multimode optical fiber to a diameter of the cladding of the amplification optical fiber; and
a pumping light combiner that causes signal light propagated through each core of a multicore optical fiber to enter each core of the amplification optical fiber, and causes the pumping light output from the pumping light source and passing through the core size conversion unit to enter the cladding including the cores of the amplification optical fiber.

By arranging the core size conversion unit, a spot size of the pumping light can be matched with a cladding diameter of the amplification optical fiber in the pumping light combiner, so that loss of the pumping light can be reduced. Furthermore, since the spot size of the pumping light can be made to correspond to an amplification fiber having a small cladding diameter, amplification efficiency can be increased also from the viewpoint of an increase in Rcc. Therefore, the present invention can provide the optical fiber amplifier in which the loss of the pumping light in the pumping light combiner is reduced and the amplification efficiency is increased.

The amplification optical fiber of the optical fiber amplifier according to the present invention includes a resin on an outer periphery of the cladding, and a relationship among a refractive index n1 of the core, a refractive index n2 of the cladding, and a refractive index n3 of the resin is n1 > n2 > n3.

The amplification optical fiber of the optical fiber amplifier according to the present invention may include an outer cladding on an outer periphery of the cladding and a coating on an outer periphery of the outer cladding, and a relationship among a refractive index n1 of the core, a refractive index n2 of the cladding, and a refractive index nc of the outer cladding may be n1 > n2 > nc.

In the optical fiber amplifier according to the present invention, a reduction ratio of the core reduced by the core size conversion unit is preferably larger than 0.19 and smaller than 0.76.

### Advantageous Effects of Invention

The present invention can provide an optical fiber amplifier in which loss of pumping light in a pumping light combiner is reduced and amplification efficiency is increased.

### Brief Description of Drawings

Fig. 1 is a diagram describing a configuration of an optical fiber amplifier.
Fig. 2 is a diagram describing a configuration of an optical fiber amplifier according to the present invention.
Fig. 3 is a diagram describing a core size conversion unit of the optical fiber amplifier according to the present invention.
Fig. 4 is a diagram describing an experimental system.
Fig. 5 is a diagram describing a relationship between a core diameter and transmittance of pumping light.
Fig. 6 is a diagram describing a pumping light combiner of the optical fiber amplifier according to the present invention.
Fig. 7 is a cross-sectional view describing an amplification optical fiber of the optical fiber amplifier according to the present invention.
Fig. 8 is a cross-sectional view describing an amplification optical fiber of the optical fiber amplifier according to the present invention.

### Description of Embodiments

Embodiments of the present invention will be described with reference to the accompanying drawings. The embodiments to be described below are examples of the present invention, and the present invention is not limited to the embodiments to be described below. Note that components assigned the same reference numerals in the present specification and the drawings are the same components.

### (Related Technology)

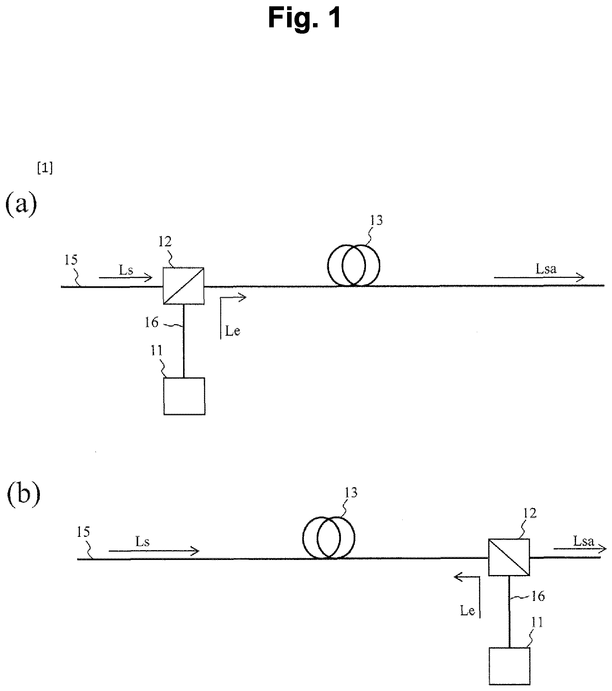

Fig. 1 is a diagram describing a configuration of a cladding-pumped optical fiber amplifier (300a, 300b). A pumping light combiner 12 that multiplexes pumping light Le is connected to one end of a pumping optical fiber 13 doped with a rare earth element, and amplifies signal light Ls guided through a core. The amplified signal light is displayed as "Lsa". Note that while it is typical that an isolator is connected to another end of the pumping optical fiber 13 in accordance with a propagation direction of the signal light Ls, the isolator is omitted in this drawing. In addition, a residual pumping light remover may be installed to emit the pumping light Le not absorbed by an amplification optical fiber 13 to the outside of the pumping optical fiber 13. Figs. 1(a) and 1(b) illustrate a forward pumping type in which the pumping light Le enters an input side of the signal light Ls and a backward pumping type in which the pumping light Le enters an output side of the amplified signal light Lsa, respectively. In general, the pumping light Le output from a pumping light source 11 is propagated to the pumping light combiner 12 through a multimode optical fiber 16 having a core diameter of 105 µm.

### (First Embodiment)

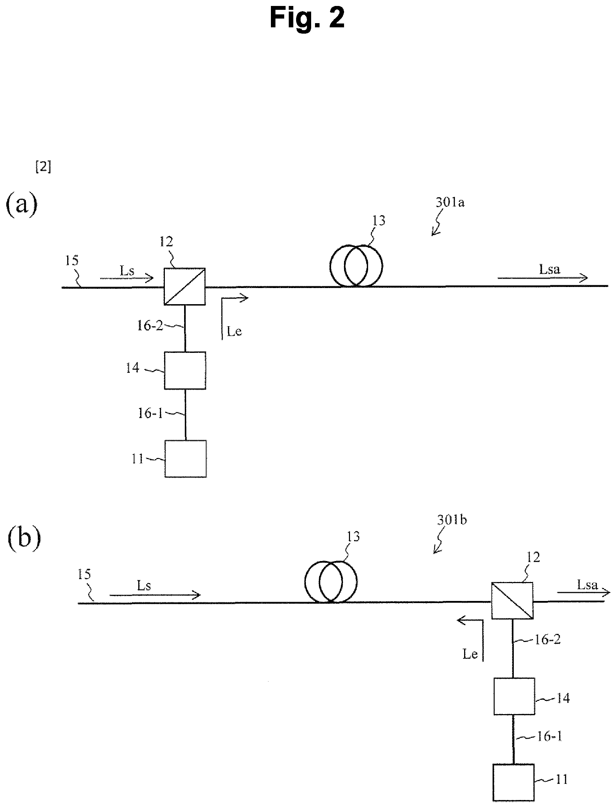

Fig. 2 is a diagram describing a configuration of an optical fiber amplifier (301a, 301b) according to the present embodiment. The optical fiber amplifier (301a, 301b) includes:
an amplification optical fiber 13 having a plurality of cores doped with a rare earth element in a cladding;
a pumping light source 11 that outputs pumping light for pumping the rare earth element to a multimode optical fiber 16-1;
a core size conversion unit 14 that reduces a diameter of a core of the multimode optical fiber 16-1 to a diameter of the cladding of the amplification optical fiber 13; and
a pumping light combiner 12 that causes signal light Ls propagated through each core of a multicore optical fiber 15 to enter each core of the amplification optical fiber 13, and causes the pumping light Le output from the pumping light source 11 and passing through the core size conversion unit 14 to enter the cladding including the cores of the amplification optical fiber 13.

The optical fiber amplifier 301a is of a forward pumping type, and the optical fiber amplifier 301b is of a backward pumping type.

The optical fiber amplifier (301a, 301b) is different from the optical fiber amplifier (300a, 300b) in Fig. 1 in that the core size conversion unit 14 is provided between the pumping light source 11 and the pumping light combiner 12. The core size conversion unit 14 and the pumping light source 11 are connected by the multimode optical fiber 16-1. The core size conversion unit 14 and the pumping light combiner 12 are connected by a multimode optical fiber 16-2.

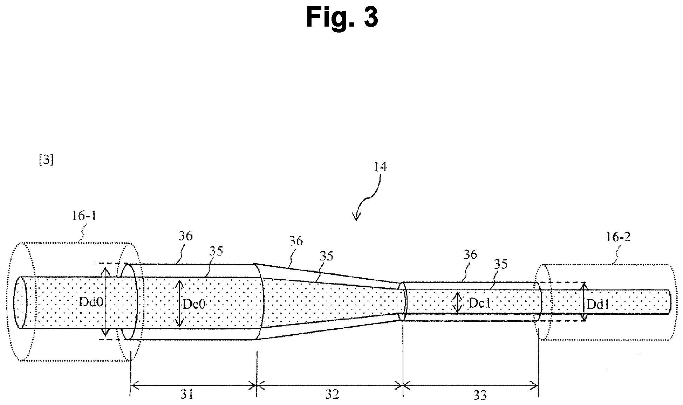

Fig. 3 is a diagram describing an example of a configuration of the core size conversion unit 14. The core size conversion unit 14 includes a large core portion 31, a down tapered portion 32, and a small core portion 33. The large core portion 31 is connected to the multimode optical fiber 16-1, and the small core portion 33 is connected to the multimode optical fiber 16-2. When cladding diameters of the multimode optical fiber 16-1 and the large core portion 31 are denoted by Dd0 and core diameters thereof are denoted by Dc0, Dd0 = 125 µm and Dc0 = 105 µm in general. Cladding diameters of the multimode optical fiber 16-2 and the small core portion 33 are denoted by Dd1, and core diameters thereof are denoted by Dc1. The down tapered portion 32 connects the large core portion 31 and the small core portion 33, and reduces a cladding diameter from Dd0 to Dd1 and a core diameter from Dc0 to Dc1.

Note that Fig. 3 shows an example of the configuration, and the core size conversion unit 14 may be configured to output the pumping light Le from the multimode optical fiber 16-1 to a space, control a spot size by means of a lens or the like, and get the pumping light entering the multimode optical fiber 16-2.

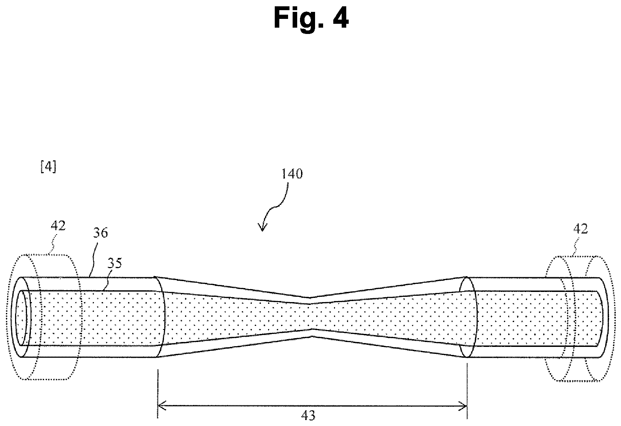

The core diameter Dc1 that can be reduced by the core size conversion unit 14 will be described. Fig. 4 is a diagram illustrating a taper experimental system using a typical multimode optical fiber 140 having a core diameter of 105 µm and an NA of 0.22 connected to a pumping light source. When NA is a numerical aperture, a refractive index of a core is n_{core}, and a refractive index of a cladding is n_{clad}, it is defined as follows.
[Math. 1] $NA = \sqrt{{n}_{core}^{2} - {n}_{clad}^{2}}$ (1)

The multimode optical fiber 140 is covered with a coating 42 having a higher refractive index than that of a core 35 or a cladding 36, and light coupled from the core 35 to the cladding 36 is immediately absorbed by the coating 42 and becomes a loss.

A coating of an intermediate portion of the multimode optical fiber 140 is removed, and the multimode optical fiber is heated and stretched by a ceramic heater to form a tapered portion 43. A pumping light source is connected to one end of the multimode optical fiber 140, pumping light is input, and the pumping light output from another end thereof is received by a power meter to measure transmittance.

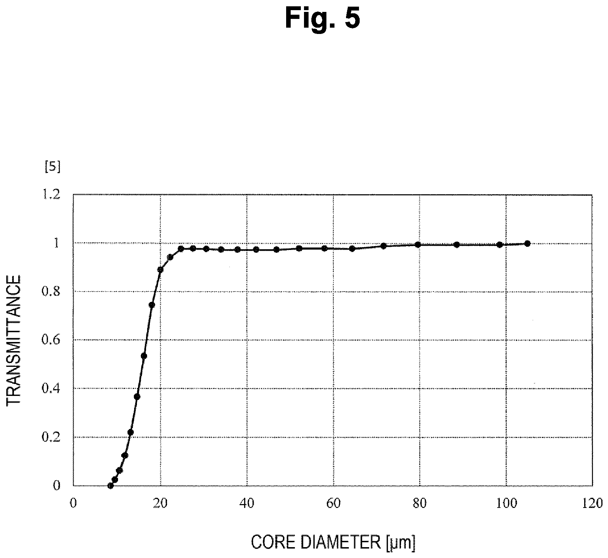

Fig. 5 is a diagram describing a relationship between a core diameter of a tapered waist portion having the smallest cladding diameter of the tapered portion 43 and transmittance of pumping light. From Fig. 5, when the core diameter is 20 µm or more, the transmittance hardly changes, and a value close to 100% is obtained. Since the transmittance rapidly decreases when the core diameter becomes smaller than 20 µm, it can be seen that a lower limit of the core diameter Dc1 reduced by the taper is 0.19 times the core diameter Dc0 of the multimode optical fiber 16-1. That is, an optical fiber having a typical core diameter Dc0 of 105 µm, used as the multimode optical fiber 16-1, requires the core diameter Dc1 of the multimode optical fiber 16-2 set to 20 µm or more.

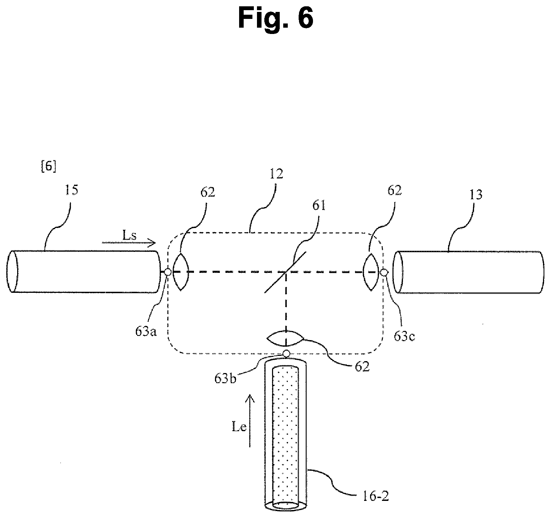

Fig. 6 is a diagram describing a structure of the pumping light combiner 12. The pumping light combiner 12 includes a port 63a to which the signal light Ls is input and a port 63b to which the pumping light Le is input. These light beams are subjected to wavelength multiplexing by a dichroic mirror 61, lenses 62, and the like, and output to one output port 63c. The signal light Ls is guided through each core of the multicore optical fiber 15, and is incident on each core of the amplification optical fiber 13. The pumping light Le multimode-propagated through the core of the multimode optical fiber 16-2 is incident on an entire cladding region including the cores of the amplification optical fiber 13.

Note that a spot size of the pumping light Le can be changed by adjusting the lenses 62 included in the pumping light combiner 12, and the pumping light combiner 12 can also perform a function of the core size conversion unit 14.

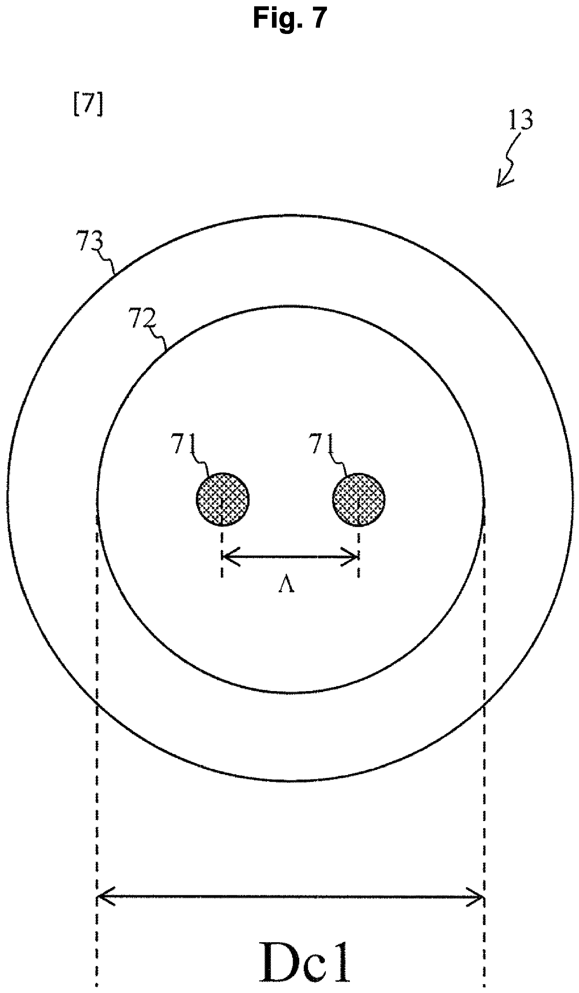

Fig. 7 is a diagram describing a configuration of a cross section of a rare-earth-doped optical fiber which is the amplification optical fiber 13. The amplification optical fiber 13 of this configuration includes cores 71 each having a refractive index of n1, a cladding 72 surrounding the cores and having a refractive index of n2, and a resin 73 surrounding the cladding 72 and having a refractive index of n3. A relationship between these refractive indexes is as follows.
n1 > n2 > n3

"Λ" represents a center-to-center distance (an inter-core distance) of the cores 71.

In this drawing, the amplification optical fiber 13 having the two cores 71 is described, but the number of cores of the amplification optical fiber 13 may be three or more.

Note that, when the amplification optical fiber 13 is connected to an output side of the pumping light combiner 12 via an optical fiber, the optical fiber also has the structure of Fig. 7. Similarly, in the optical fiber, a coating which is the resin 73 is set to have a lower refractive index than that of the cladding 72. In the optical fiber, pumping light entering a cladding region (a region including both cores 71 and a cladding 72) from the pumping light combiner 12 enters the cladding region of the amplification optical fiber 13.

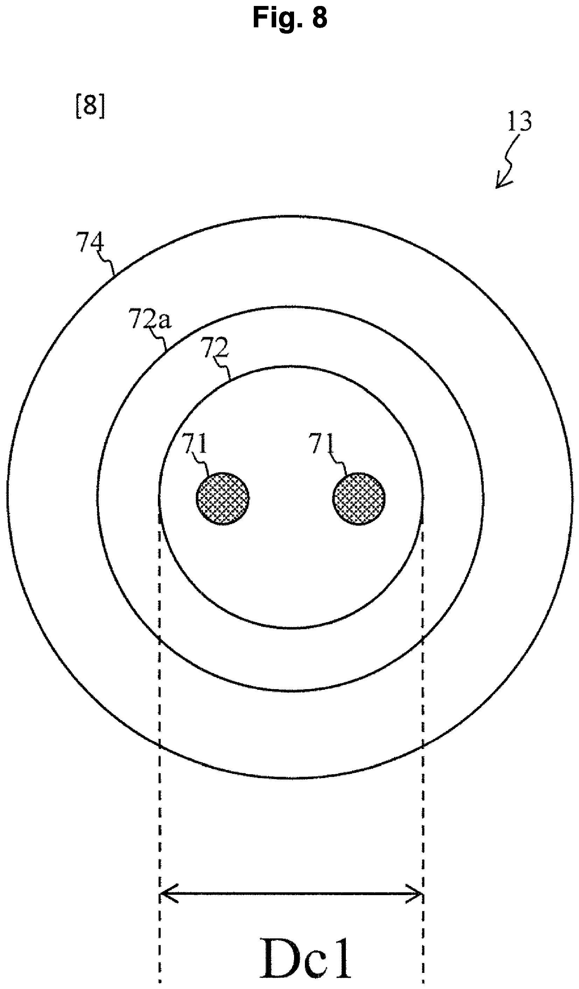

Fig. 8 is a diagram describing a configuration of a cross section of a rare-earth-doped optical fiber which is another example of the amplification optical fiber 13. The amplification optical fiber 13 of this configuration includes cores 71 each having a refractive index of n1, a cladding 72 surrounding the cores 71 and having a refractive index of n2, an outer cladding 72a surrounding the cladding 72 and having a refractive index of nc, and a coating 74 surrounding the outer cladding 72a and having a refractive index of n4. A relationship between these refractive indexes is as follows. $n 1 > n 2 > nc$

In this drawing, the amplification optical fiber 13 having the two cores 71 is described, but the number of cores of the amplification optical fiber 13 may be three or more.

A diameter of the cladding 72 of the amplification optical fiber 13 having this structure coincides with Dc1 (the core diameters of the small core portion 33 of the core size conversion unit 14 and the multimode optical fiber 16-2). Therefore, the pumping light combiner 12 can cause pumping light having a spot size Dc1 incident from the multimode optical fiber 16-2 to enter the cladding 72.

Note that, since the pumping light propagating through a cladding region (a region including both the cores 71 and the cladding 72) is confined in the cladding region by a refractive index difference from the outer cladding 72a, n4 may have any refractive index.

As described above, in order to improve the amplification efficiency, it is effective to reduce the cladding diameter (increase the Rcc). However, as described in Fig. 5, the multimode optical fiber 16-1, having the core diameter of 105 µm, requires the core diameter Dc1 of the multimode optical fiber 16-2 set to 20 µm or more (a lower limit of a core reduction ratio that the core size conversion unit 14 has is 0.19). Therefore, the diameter of the cladding 72 of the amplification optical fiber 13, which is Dc1, is 20 µm or more.

Next, an upper limit of Dc1 will be described. A diameter of a core wire of an optical fiber defined in the IEC optical fiber standard document IEC 60793-2-60 is 80 µm at the minimum, and the diameter less than this causes a problem from the viewpoint of handleability and reliability.

When the diameter of the cladding 72 is 80 µm or more, there is no problem in handleability and reliability, and the amplification fiber 13 may have the structure described with reference to Fig. 7.

On the other hand, when the diameter of the cladding 72 is less than 80 µm in order to improve the Rcc, the amplification fiber 13 has the double cladding structure described with reference to Fig. 8, and the diameter of the outer cladding 72a is set to 80 µm or more in order to solve the problem in handleability and reliability. That is, when the cladding diameter Dd1 of the multimode optical fiber 16-2 is less than 80 µm, the core diameter Dc1 of the multimode optical fiber 16-2 is inevitably less than 80 µm, and the diameter of the cladding 72 of the amplification optical fiber 13 is also less than 80 µm.

As described above, it is preferable that the diameter of the cladding 72 of the amplification optical fiber 13 in Fig. 8 is as follows. $20 μm < Dc 1 < 80 μm$ Numerical values within the above are provided under the condition where the core diameter of the multimode optical fiber 16-1 is 105 µm, and are expressed as ratios thereof to the core diameter of the multimode optical fiber 16-1, each of which is more than 0.19 and less than 0.76.

If the diameter of the outer cladding 72a is, for example, 80 µm to 125 µm, the handleability and reliability of the amplification optical fiber 13 can be made equivalent to those of the conventional optical fiber.

On the other hand, when the core diameter (Dc1) of the multimode optical fiber 16-2 is 80 µm to 105 µm, the amplification optical fiber 13 of Fig. 7 may be used, and the diameter of the cladding 72 may be designed to coincide with Dc1.

### Reference Signs List

- 11: Pumping light source
- 12: Pumping light combiner
- 13: Amplification optical fiber
- 14: Core size conversion unit
- 15: Multicore optical fiber
- 16, 16-1, 16-2: Multimode optical fiber
- 31: Large core portion
- 32: Down tapered portion
- 33: Small core portion
- 35: Core
- 36: Cladding
- 42: Coating
- 43: Tapered portion
- 61: Dichroic mirror
- 62: Lens
- 63a, 63b, 63c: Port
- 71: Core
- 72: Cladding
- 72a: Outer cladding
- 73: Resin
- 74: Coating
- 140: Multimode optical fiber
- 301a, 301b: Optical fiber amplifier

## Claims

1. An optical fiber amplifier comprising:
an amplification optical fiber having a plurality of cores doped with a rare earth element in a cladding;
a pumping light source that outputs pumping light for pumping the rare earth element to a multimode optical fiber;
a pumping light combiner that causes signal light propagated through each core of a multicore optical fiber to enter each core of the amplification optical fiber, and causes the pumping light output from the pumping light source and passing through the core size conversion unit to enter the cladding including the cores of the amplification optical fiber,
**characterized in that** it further comprises
a core size conversion unit that reduces a diameter of a core of the multimode optical fiber to a diameter of the cladding of the amplification optical fiber

2. The optical fiber amplifier according to claim 1, wherein
the amplification optical fiber includes a resin on an outer periphery of the cladding, and
a relationship among a refractive index n1 of the core, a refractive index n2 of the cladding, and a refractive index n3 of the resin is n1 > n2 > n3.

3. The optical fiber amplifier according to claim 1, wherein
the amplification optical fiber includes an outer cladding on an outer periphery of the cladding and a coating on an outer periphery of the outer cladding, and
a relationship among a refractive index n1 of the core, a refractive index n2 of the cladding, and a refractive index nc of the outer cladding is n1 > n2 > nc.

4. The optical fiber amplifier according to any one of claims 1 to 3, wherein a reduction ratio of the core reduced by the core size conversion unit is larger than 0.19 and smaller than 0.76.

## Patentansprüche

1. Faseroptischer Verstärker, umfassend:
eine optische Verstärkungsfaser mit einer Vielzahl von mit einem Seltenerdelement dotierten Kernen in einem Mantel;
eine Pumplichtquelle, die Pumplicht zum Pumpen des Seltenerdelements an eine optische Multimodefaser ausgibt;
ein Pumplichtkombinierer, der Signallicht, das sich durch jeden Kern einer optischen Mehrkernfaser ausgebreitet hat, in jeden Kern der optischen Verstärkungsfaser eintreten lässt und das von der Pumplichtquelle ausgegebene und durch die Kerngrößenumwandlungseinheit hindurchgehende Pumplicht in den die Kerne der optischen Verstärkungsfaser enthaltenden Mantel eintreten lässt,
**dadurch gekennzeichnet, dass** er ferner
eine Kerngrößenumwandlungseinheit umfasst, die einen Durchmesser eines Kerns der optischen Multimodefaser auf einen Durchmesser des Mantels der optischen Verstärkungsfaser reduziert.

2. Faseroptischer Verstärker nach Anspruch 1, wobei
die optische Verstärkungsfaser ein Harz an einem Außenumfang des Mantels enthält und
eine Beziehung zwischen einem Brechungsindex n1 des Kerns, einem Brechungsindex n2 des Mantels und einem Brechungsindex n3 des Harzes n1 > n2 > n3 ist.

3. Faseroptischer Verstärker nach Anspruch 1, wobei
die optische Verstärkungsfaser einen äußeren Mantel an einem Außenumfang des Mantels und eine Beschichtung an einem Außenumfang des äußeren Mantels enthält und
eine Beziehung zwischen einem Brechungsindex n1 des Kerns, einem Brechungsindex n2 des Mantels und einem Brechungsindex nc des äußeren Mantels n1 > n2 > nc ist.

4. Faseroptischer Verstärker nach einem der Ansprüche 1 bis 3, wobei ein Reduktionsverhältnis des durch die Kerngrößenumwandlungseinheit reduzierten Kerns größer als 0,19 und kleiner als 0,76 ist.

## Revendications

1. Amplificateur à fibre optique comprenant :
une fibre optique d'amplification ayant une pluralité de cœurs dopés avec un élément de terre rare dans une gaine ;
une source de lumière de pompage qui émet une lumière de pompage pour pomper l'élément de terre rare vers une fibre optique multimode ;
un combineur de lumière de pompage qui fait entrer une lumière de signal propagée à travers chaque cœur d'une fibre optique multicœur dans chaque cœur de la fibre optique d'amplification, et fait entrer la lumière de pompage émise par la source de lumière de pompage et passant à travers l'unité de conversion de taille de cœur dans la gaine incluant les cœurs de la fibre optique d'amplification, **caractérisé en ce qu'**il comprend en outre
une unité de conversion de taille de cœur qui réduit un diamètre d'un cœur de la fibre optique multimode à un diamètre de la gaine de la fibre optique d'amplification.

2. Amplificateur à fibre optique selon la revendication 1, dans lequel
la fibre optique d'amplification inclut une résine sur une périphérie extérieure de la gaine, et
une relation entre un indice de réfraction n1 du cœur, un indice de réfraction n2 de la gaine et un indice de réfraction n3 de la résine est n1 > n2 > n3.

3. Amplificateur à fibre optique selon la revendication 1, dans lequel
la fibre optique d'amplification inclut une gaine extérieure sur une périphérie extérieure de la gaine et un revêtement sur une périphérie extérieure de la gaine extérieure, et
une relation entre un indice de réfraction n1 du cœur, un indice de réfraction n2 de la gaine et un indice de réfraction nc de la gaine extérieure est n1 > n2 > nc.

4. Amplificateur à fibre optique selon l'une quelconque des revendications 1 à 3, dans lequel un rapport de réduction du cœur réduit par l'unité de conversion de taille de cœur est supérieur à 0,19 et inférieur à 0,76.
